# EUROPEAN PATENT APPLICATION

(11) **EP 4 391 516 A1**
(43) Date of publication of application: **26.06.2024**
(21) Application number: 23168882.1
(22) Date of filing: 20.04.2023
(51) Int. Cl.: H04N 1/32, G06F 21/10, G06F 21/62, H04N 1/387

(54) **IMAGE OBFUSCATION**

(30) Priority: 19.12.2022 US 202263433753 P; 01.03.2023 US 202318116215
(71) Applicant: Palantir Technologies Inc., Denver, CO 80202 (US)
(72) Inventor: JAGASIA, Arnav, Denver, 80202 (US); TANDON, Anisha, Denver, 80202 (US); HERRERO-QUEVEDO, David, Denver, 80202 (US); CHRISTOPH, Fee, Denver, 80202 (US); CARIUS, Lars, Denver, 80202 (US); PATIL, Mihir, Denver, 80202 (US)
(74) Representative: Sayer, Robert David

(57) **Abstract**

A computer-implemented method, system and computer program is disclosed. The method may comprise providing an image comprising a plurality of pixels, identifying at least one portion of the image to be obfuscated, modifying pixels of the at least one image portion using a key for producing an updated image in which the at least one image portion is obfuscated, providing the key, or a link to the key, in an access profile for the identified at least one image portion and allocating permissions to one or more users for enabling them to view the at least one image portion, by use of the key, when viewing the updated image.

## Description

### Field of the disclosure

The present disclosure relates to methods, systems and computer programs for image obfuscation, for example to hide sensitive information visible in one or more portions of an image.

### Background

Digital images such as photographs and video clips may show sensitive information, for example the identity of one or more people, a geolocation on a satellite image, health-related information and/or images of events that some people may find offensive or disturbing. It is known to obfuscate entire images using filters, e.g. to blur the image and/or to apply one or more overlays. Such methods can be inflexible because some users may need to see the original information that has been obfuscated even if others may not. Some users may be interested in other parts of the image but cannot see those parts because the entire image is obfuscated.

### Summary

According to one aspect, there is described a computer-implemented method, wherein the method is performed using one or more processors, the method comprising: 1.

A computer-implemented method, wherein the method is performed using one or more processors, the method comprising:
providing an image comprising a plurality of pixels;
identifying at least one portion of the image to be obfuscated;
modifying pixels of the at least one image portion using a key for producing an updated image in which the at least one image portion is obfuscated;
providing the key, or a link to the key, in an access profile for the identified at least one image portion; and
allocating permissions to one or more users for enabling them to view the at least one image portion, by use of the key, when viewing the updated image.

The at least one image portion may be a sub-portion of the image.

The computer-implemented method may further comprise identifying a plurality of sub-portions of the image to be modified; and, for each image portion: modifying pixels of the image portion using a respective key; and storing the key in a respective access profile.

Modifying the pixels of the at least one image portion may comprise using the key to implement a reversible transform such that pixel information of the at least one image portion is retained within the updated image.

The reversible transform may modify the pixels of the at least one image portion by swapping pixel information between pairs of pixels within the image portion.

The key may map to a swap list for use by the reversible transform, the swap list comprising pairwise combinations of pixel positions within the at least one image portion for which respective pixel information will be swapped by the modification.

The reversible transform may further modify the pixels of the at least one image portion by changing color channel information, wherein the key maps to change amounts of color channel information to apply for each pixel position.

The key may map to a swap list comprising (i) a unique pairwise combination of pixel positions and (ii) a unique set of change color change amounts to apply for each pixel position.

The key may be a received seed value or the key may be generated based on a received seed value.

The computer-implemented method may further comprise receiving input defining at least one bounding box on the provided image, the identified at least one image portion comprising pixels within the bounding box.

The computer-implemented method may further comprise inputting the provided image to a machine-learned model trained to identify portions of images representing sensitive information, wherein the identified at least one image portion is identified by the machine-learned model.

The access profile may be stored as metadata associated with the provided image.

The metadata may comprise an indication of the key, or a link to the key, and location information for the at least one image portion modified by the key.

The computer-implemented method may be performed by a computer system comprising the one or more processors, and the method may further comprise storing the provided image on one or more memories of the computer system and deleting the provided image after producing the updated image.

The computer-implemented method may further comprise: providing the updated image for display to a requesting user; receiving selection of the at least one image portion by the requesting user; determining, based on the allocated permissions, that the requesting user is permitted to access the key for the selected at least one image portion; accessing the key in the access profile for the selected at least one image portion; and reversing the modification of pixels of the selected at least one image portion using the accessed key.

Selection of the at least one image portion may be received at least by means of hovering a movable pointer over the at least one image portion. A further input such as a mouse click may be required.

The computer-implemented method may further comprise using the key to access the swap list used for transforming the selected at least one image portion, and using the swap list to at least reverse the positions of pixels of the selected at least one image portion.

The computer-implemented method may further comprise using the key to determine change amounts of color information used for transforming the selected at least one image portion, and reversing the changes of color information of the selected at least one image portion.

According to another aspect, there may be provided a non-transitory computer readable medium comprising instructions that, when executed, cause one or more processors of a computing system to perform:
providing an image comprising a plurality of pixels;
identifying at least one portion of the image to be obfuscated;
modifying pixels of the at least one image portion using a key for producing an updated image in which the at least one image portion is obfuscated;
providing the key, or a link to the key, in an access profile for the identified at least one image portion; and
allocating permissions to one or more users for enabling them to view the at least one image portion, by use of the key, when viewing the updated image.

According to another aspect, there may be provided an apparatus comprising: one or more processors; and a memory storing instructions that, when executed by the one or more processors, cause the system to perform:
providing an image comprising a plurality of pixels;
identifying at least one portion of the image to be obfuscated;
modifying pixels of the at least one image portion using a key for producing an updated image in which the at least one image portion is obfuscated;
providing the key, or a link to the key, in an access profile for the identified at least one image portion; and
allocating permissions to one or more users for enabling them to view the at least one image portion, by use of the key, when viewing the updated image.

### Brief Description of the Drawings:

Example embodiments will now be described by way of non-limiting example with reference to the accompanying drawings, in which:
FIG. 1 is a block diagram illustrating a network system comprising a group of application servers of a data processing platform according to some embodiments of this specification;
FIG. 2 is a block diagram of a computer system according to embodiments of this specification;
FIG. 3 is a block diagram of functional modules of an application according to example embodiments of this specification;
FIG. 4 is a flow diagram indicating operations according to example embodiments;
FIGs. 5A - 5B show example user interface screenshots showing respective stages of a method for obfuscating at least one image portion according to example embodiments;
FIG. 6 shows an example user interface screenshot for creating an encryption channel according to example embodiments;
FIGs. 7A - 7C show visually how pixel information may be modified based on a key according to example embodiments; and
FIG. 8 show visually how identified pixel regions may overlap according to example embodiments.

### Detailed Description of Certain Embodiments

Example embodiments relates to methods, systems and computer programs for image obfuscation. Images may comprise individual images or sequences of images which are part of a video clip or video file.

Obfuscation may mean making at least part of what is shown in an image, i.e. by pixels of the image, unclear or unintelligible.

An image, in this context a digital image, may comprise a two-dimensional grid or arrangement of pixels. Pixels have a certain position in the image and each pixel is represented by data or information indicative of one or more pixel values. In monochrome images, a pixel value may represent how bright the pixel is and, if a color image, pixel values may represent color channel contributions. For example, a red, green and blue (RGB) color space may represent colors based on values for each of red, green and blue channels. In an 8-bit system, each of these pixel values may comprise a number ranging from 0 to 255. As is known, images may be encoded and stored in various file formats including bitmap, the Joint Photographic Experts Group (JPEG) format, the Portable Network Graphics (PNG) format and raw image format. Example embodiments are not limited to any particular file format.

Images may show sensitive information, for example the identity of one or more people, a geolocation on a satellite image, health-related information and/or images of events that some people may find offensive or disturbing. There are numerous other examples. For this reason, it may be beneficial or even essential to obfuscate at least part of the image content so that, when decoded and displayed using some form of image viewing software, the sensitive parts cannot be seen clearly or cannot be seen at all. In some situations, it may not be necessary for all users within an organization to see entire images to perform task, and hence it is appropriate to obfuscate sensitive information at least to reduce the mental burden on those users and/or to maintain secrecy. As noted above, it is known to obfuscate images using filters, e.g. to blur the image and/or to apply one or more overlays. Such methods can be inflexible because they tend to obfuscate the entire image and, in use, some users may need to see all portions of an image, even those considered sensitive. Those that do not need to see sensitive parts may nevertheless be restricted from performing certain tasks because even non-sensitive parts are obfuscated. It is also inefficient and laborious to create and store multiple versions of the same image with corresponding levels of obfuscation for different types of users.

Example embodiments seek to improve or alleviate at least some of these issues.

For example, some embodiments may involve providing an image comprising a plurality of pixels. Providing may comprise receiving, storing and/or generating the image. For example, images may be stored on a server and can be opened for viewing by a requesting user via any suitable file management system and associated user interface. As another example, images may be live images received from a remote camera system. Images may be color or monochrome. Images may be encoded and stored in any suitable file format and have any suitable range of resolutions. Images may be still images or video images, i.e. part of a sequence of images providing a video clip.

A user or entity may identify at least one portion of the image to be obfuscated. A portion may comprise any two-dimensional area including pixels and may comprise the whole image or only a sub-portion of the image. In some embodiments, multiple sub-portions may be individually identified and treated collectively or even separately for obfuscation operations to be described below. In example embodiments below, and for ease of reference, it may be assumed that references to image portions means image sub-portions.

In some example embodiments, identification may be performed by a user. The user may view the image and identify at least one portion by defining a bounding box or similar by means of, for example, a mouse click-and-drag input operation; this selects an area of pixels within the image. Alternatively, users may simply input co-ordinates and/or coordinate offsets to define manually an image portion. Different users accessing the same image may identify different image portions within said same image. Different image portions may overlap, at least partially.

Alternatively, or additionally, identification may be performed by an entity such as a machine-learned model. For example, the machine-learned model may be trained to identify image content which is considered sensitive, which may be performed using a set of training images with parts of said images labelled as sensitive. In an inference stage, images may be input to the machined-learned model in order automatically to identify portions of images which contain sensitive information.

For the or each identified portion, pixels of said portion may then be modified using a key for producing an updated image in which the at least one image portion is obfuscated. The key may be a received seed or may be generated based on a received seed. Use of the key makes it possible to undo the modification by means of the key. The term obfuscated has the above meaning but the term "encrypted" may also be used because the pixel information is transformed based on a key and can be un-transformed also based on the key.

The key may be associated with the or each identified portion. Where there are multiple identified portions, each portion may have its own respective key. An access profile may be created for the or each identified portion and the key for that portion may be stored in the access profile or a link may be provided to a repository storing keys for different image portions. Where there are multiple identified portions which at least partially overlap, it may be appropriate to store or otherwise record an order of obfuscation operations to enable reversal of the obfuscation operations. For example, a first identified portion which is overlaid by a second identified portion may require reversal of the obfuscation operation on the second identified portion to be performed prior to that on the first identified portion. The access profile may comprise metadata associated with the image or image file, for example stored in a so-called sidecar file. In some embodiments, the metadata may comprise a part of the image itself, e.g. embedded in the image data using any suitable and known process. The access profile may also store or otherwise identify the associated image portion, e.g. the bounding box co-ordinates or similar. It will therefore be appreciated that some images may have multiple access profiles, one for each identified image portion, each access profile storing a different key. Alternatively, one access profile may store one key for multiple image portions.

Permissions may be allocated for one or more users, that is users who may need to view the updated image. These users may be a subset of a larger group of users. Permissions may define if said users can view the identified one or more image portions. If a requesting user opens the image, they may see the updated image in which the one or more identified image portions are obfuscated. Based on their permissions, they may or may not be able to decrypt the obfuscated portions so that they can view the original content for those portion(s). This may or may not involve the users having access to the relevant key(s); for example it may be an application or platform providing such obfuscation functionality that checks permissions for the user and, if permitted, accesses the key in the relevant access profile to decrypt the image portion for the user. This may involve using the key as a seed and running it through a transform which generates resources for decryption, e.g. a swap list to be described below. In this way, without the transform, users cannot decrypt the encrypted data. Permissions may be allocated in a number of different ways. For example, creating an access profile for the identified one or more image portions may involve creating a license which may be allocated or distributed to one or multiple users, e.g. linked or associated with user identifiers within an organization's permissioning system. Licenses may be allocated to users within certain workgroups or having certain titles or work functions within the organization. Licenses may be allocated on a more granular basis if need be. Licenses may be revoked in certain situations. As a consequence, some users may be able to reverse the obfuscation process for only some obfuscated image portions, all obfuscated image portions or no obfuscated image portions, depending on allocated permissions. Licenses may be limited in one or more ways. For example, a license may be rate-limited, e.g., permitting only a predetermined number of obfuscation reversals, possibly within a predetermined timeframe. Additionally, or alternatively, licenses may be linked to a particular required purpose or purposes, and users may need to specify via input an intended purpose which should match that given in the relevant license. The user's intended purpose may be logged and made auditable.

In some example embodiments, modifying pixels of the at least one image portion may involve using the key to implement a reversible transform such that pixel information of the at least one image portion is retained within the updated image. In this way, access to the original image is not required to reverse the transform. The key can be used in a reverse transform to recover the original information. If the image contains highly sensitive information, it may also be beneficial to delete the original image (or at least the relevant image portion) from memory after performing the modification operations described herein. This will at least avoid unauthorised access to sensitive information. Additionally, it saves on storage resources.

Example embodiments will now be described with reference to the Figures.

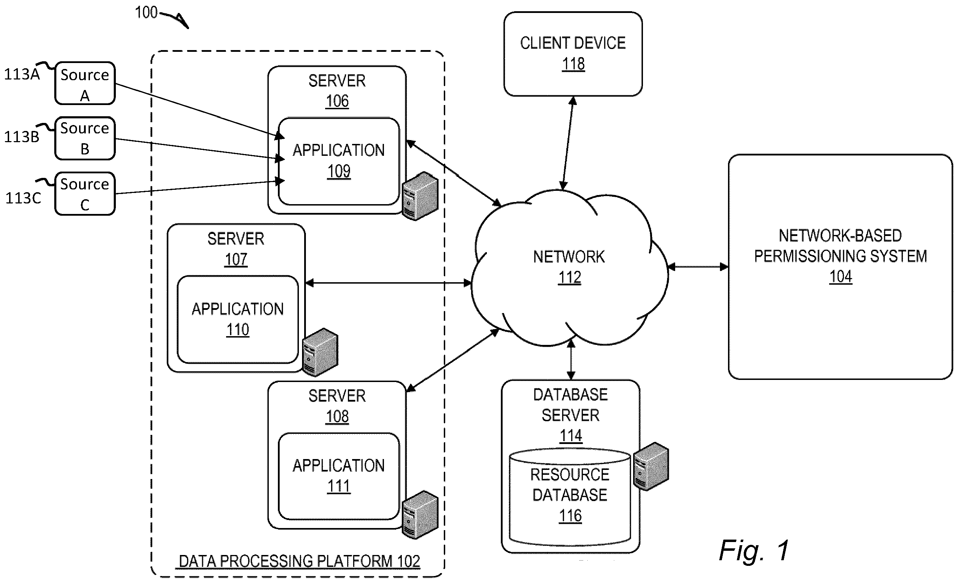

FIG. 1 is a network diagram depicting a network system 100 comprising a data processing platform 102 in communication with a network-based permissioning system 104 (hereafter "permissioning system") configured for registering and evaluating access permissions for data resources to which a group of application servers 106-108 share common access, according to an example embodiment. Consistent with some embodiments, the network system 100 may employ a client-server architecture, though the present subject matter is, of course, not limited to such an architecture, and could equally well find application in an event-driven, distributed, or peer-to-peer architecture system, for example. Moreover, it shall be appreciated that although the various functional components of the network system 100 are discussed in the singular sense, multiple instances of one or more of the various functional components may be employed.

The data processing platform 102 includes a group of application servers, specifically, servers 106-108, which host network applications 109 -111, respectively. The network applications 109-111 hosted by the data processing platform 102 may collectively compose an application suite that provides users of the network system 100 with a set of related, although independent, functionalities that are accessible by a common interface. For example, the network applications 109-111 may compose a suite of software application tools that can be used to provide a processing pipeline involving storage of images, receiving identifications of image portions to be obfuscated, modification or encryption of image portions to obfuscate image portions thereof using a key, creation of access profiles for obfuscated image portions and other related operations which will be described below. As shown, the network application 109 may receive images from one, or in this case a plurality of data sources 113A - 113C, which may be different providers. It shall be appreciated that although FIG. 1 illustrates the data processing platform 102 as including a particular number of servers, the subject matter disclosed herein is not limited to any particular number of servers and in other embodiments, fewer or additional servers and applications may be included.

The applications 109-111 may be associated with a first organization. One or more other applications (not shown) may be associated with a second, different organization or a different part or entity of the first organization. These other applications may be provided on one or more of the application servers 106, 107, 108 which need not be specific to a particular organization. Where two or more applications are provided on a common server 106-108 (or host), they may be containerised which as mentioned above enables them to share common functions.

Each of the servers 106-108 may be in communication with the network-based permissioning system 104 over a network 112 (e.g. the Internet or an intranet). Each of the servers 106-108 are further shown to be in communication with a database server 114 that facilitates access to a resource database 116 over the network 112, though in other embodiments, the servers 106-108 may access the resource database 116 directly, without the need for a separate database server 114. The resource database 116 may store other data resources that may be used by any one of the applications 109-111 hosted by the data processing platform 102.

In other embodiments, one or more of the database server 114 and the network-based permissioning system 104 may be local to the data processing platform 102; that is, they may be stored in the same location or even on the same server or host as the network applications 109, 110, 111.

As shown, the network system 100 also includes a client device 118 in communication with the data processing platform 102 and the network-based permissioning system 104 over the network 112. The client device 118 communicates and exchanges data with the data processing platform 102.

The client device 118 may be any of a variety of types of devices that include at least a display, a processor, and communication capabilities that provide access to the network 112 (e.g., a smart phone, a tablet computer, a personal digital assistant (PDA), a personal navigation device (PND), a handheld computer, a desktop computer, a laptop or netbook, or a wearable computing device), and may be operated by a user (e.g., a person) to exchange data with other components of the network system 100 that pertains to various functions and aspects associated with the network system 100 and its users. The data exchanged between the client device 118 and the data processing platform 102 involve user-selected functions available through one or more UIs. The UIs may be specifically associated with a web client (e.g., a browser) or an application 109-111 executing on the client device 118 that is in communication with the data processing platform 102. For example, the network-based permissioning system 104 provides user interfaces to a user of the client device 118 (e.g., by communicating a set of computer-readable instructions to the client device 118 that cause the client device 118 to display the user interfaces) that allow the user to register policies associated with data resources stored in the resource database 116.

In example embodiments, the client device 118 may be used by a first person or group of persons permitted to create modified versions of provided images. For example, the network-based permissioning system 104 may be configured to allocate modification licenses to such person(s) or group(s) in respect of certain images or image types or in respect of all images.

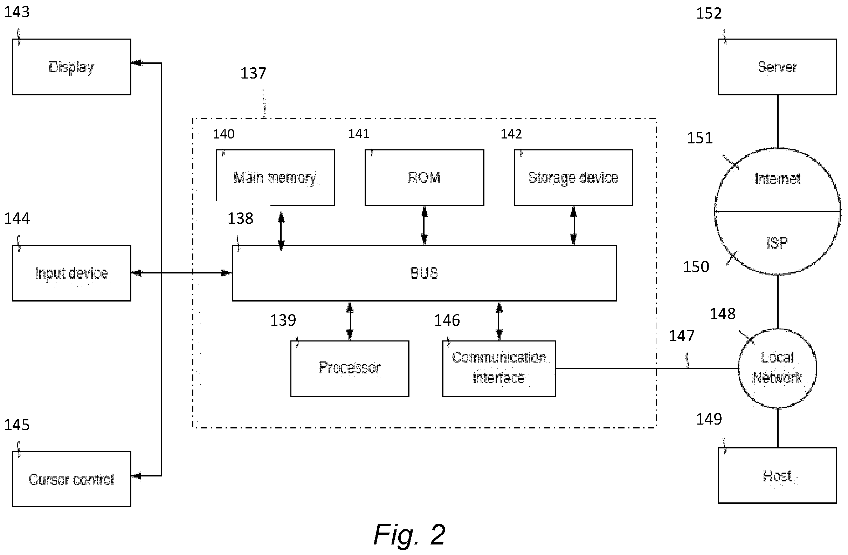

Referring to FIG. 2, a block diagram of an exemplary computer system 137, which may comprise the data processing platform 102, one or more of the servers 106-108, the database server 114 and/or the network-based permissioning system 104, consistent with examples of the present specification is shown.

Computer system 137 includes a bus 138 or other communication mechanism for communicating information, and a hardware processor 139 coupled with bus 138 for processing information. Hardware processor 139 can be, for example, a general purpose microprocessor. Hardware processor 139 comprises electrical circuitry.

Computer system 137 includes a main memory 140, such as a random access memory (RAM) or other dynamic storage device, which is coupled to the bus 138 for storing information and instructions to be executed by processor 139. The main memory 140 can also be used for storing temporary variables or other intermediate information during execution of instructions by the processor 139. Such instructions, when stored in non-transitory storage media accessible to the processor 139, render the computer system 137 into a special-purpose machine that is customized to perform the operations specified in the instructions.

Computer system 137 further includes a read only memory (ROM) 141 or other static storage device coupled to the bus 138 for storing static information and instructions for the processor 139. A storage device 142, such as a magnetic disk or optical disk, is provided and coupled to the bus 138 for storing information and instructions.

Computer system 137 can be coupled via the bus 138 to a display 143, such as a cathode ray tube (CRT), liquid crystal display, or touch screen, for displaying information to a user. An input device 144, including alphanumeric and other keys, is coupled to the bus 138 for communicating information and command selections to the processor 139. Another type of user input device is cursor control 145, for example using a mouse, a trackball, or cursor direction keys for communicating direction information and command selections to the processor 139 and for controlling cursor movement on the display 143. The input device typically has two degrees of freedom in two axes, a first axis (for example, x) and a second axis (for example, y), that allows the device to specify positions in a plane.

Computer system 137 can implement the techniques described herein using customized hard-wired logic, one or more ASICs or FPGAs, firmware and/or program logic which in combination with the computer system causes or programs computer system 137 to be a special-purpose machine. According to some embodiments, the operations, functionalities, and techniques disclosed herein are performed by computer system 137 in response to the processor 139 executing one or more sequences of one or more instructions contained in the main memory 140. Such instructions can be read into the main memory 140 from another storage medium, such as storage device 142. Execution of the sequences of instructions contained in main memory 140 causes the processor 139 to perform the process steps described herein. In alternative embodiments, hard-wired circuitry can be used in place of or in combination with software instructions.

The term "storage media" as used herein refers to any non-transitory media that stores data and/or instructions that cause a machine to operate in a specific fashion. Such storage media can comprise non-volatile media and/or volatile media. Non-volatile media includes, for example, optical or magnetic disks, such as storage device 142. Volatile media includes dynamic memory, such as main memory 140. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from, but can be used in conjunction with, transmission media. Transmission media participates in transferring information between storage media. For example, transmission media includes coaxial cables, copper wire and fibre optics, including the wires that comprise bus 138. Transmission media can also take the form of acoustic or light waves, such as those generated during radio-wave and infra-red data communications.

Various forms of media can be involved in carrying one or more sequences of one or more instructions to processor 139 for execution. For example, the instructions can initially be carried on a magnetic disk or solid state drive of a remote computer. The remote computer can load the instructions into its dynamic memory and send the instructions over a telephone line or other transmission medium using a modem. A modem local to computer system 137 can receive the data on the telephone line or other transmission medium and use an infra-red transmitter to convert the data to an infra-red signal. An infra-red detector can receive the data carried in the infra-red signal and appropriate circuitry can place the data on bus 138. Bus 138 carries the data to the main memory 140, from which the processor 139 retrieves and executes the instructions. The instructions received by the main memory 140 can optionally be stored on the storage device 142 either before or after execution by the processor 139.

Computer system 137 also includes a communication interface 146 coupled to the bus 138. The communication interface 146 provides a two-way data communication coupling to a network link 147 that is connected to a local network 148. For example, the communication interface 146 can be an integrated services digital network (ISDN) card, cable modem, satellite modem, or a modem to provide a data communication connection to a corresponding type of telephone line. As another example, the communication interface 146 can be a local area network (LAN) card to provide a data communication connection to a compatible LAN. Wireless links can also be implemented. In any such implementation, the communication interface 146 sends and receives electrical, electromagnetic or optical signals that carry digital data streams representing various types of information.

The network link 147 typically provides data communication through one or more networks to other data devices. For example, the network link 147 can provide a connection through the local network 148 to a host computer 149 or to data equipment operated by an Internet Service Provider (ISP) 150. The ISP 150 in turn provides data communication services through the world wide packet data communication network now commonly referred to as the "Internet" 151. The local network 148 and internet 151 both use electrical, electromagnetic or optical signals that carry digital data streams. The signals through the various networks and the signals on the network link 147 and through the communication interface 146, which carry the digital data to and from the computer system 137, are example forms of transmission media.

The computer system 137 can send messages and receive data, including program code, through the network(s), network link 147 and communication interface 146. For example, a first application server 106 may transmit data through the local network 148 to a different application server 107, 108.

One of said applications 109, 110, 111 or another application may provide an application according to example embodiments. The application may be a stand-alone or web-based platform, the latter being accessible to multiple users at respective different locations.

Application 109, for the sake of example, may provide an image obfuscation application (a term that will be used hereafter) according to example embodiments.

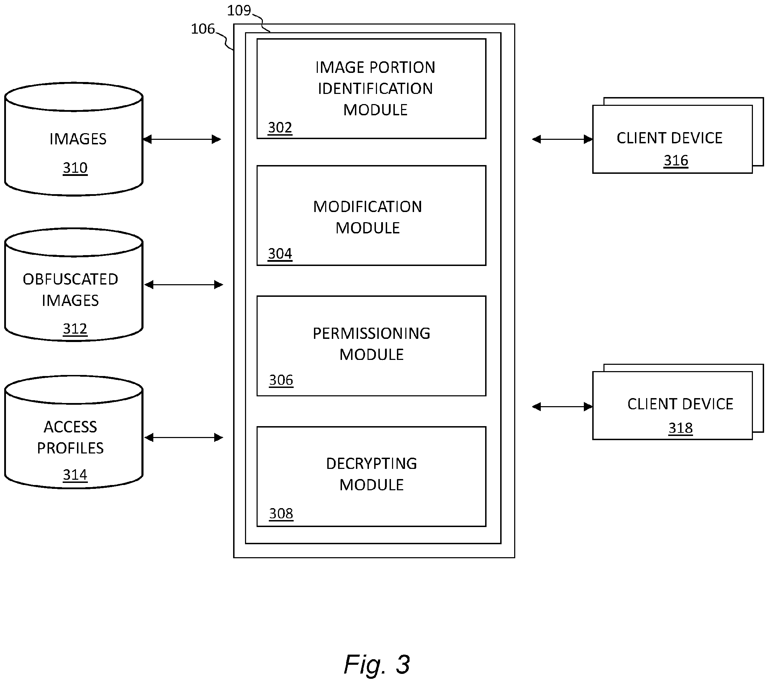

FIG. 3 shows functional modules of the image obfuscation application 109 which runs in this case on the application server 106. The image obfuscation application 109 may comprise an image portion identification module 302, a modification module 304, a permissioning module 306 and a decrypting module 308. As also shown in FIG. 3, the image obfuscation application 109 may receive image data from an images repository 310, store and/or access modified images in an obfuscated images repository 312, and store and/or access a set of access profiles 314 for determining which one or more users can undo, or decrypt, obfuscated image portions within images stored in the obfuscated images repository 312. The images repository 310, obfuscated images repository 312 and access profiles 314 may be provided by one or more external storage modules, e.g. one or more cloud servers, or may comprise one or more memories of the application server 106.

First and second client devices 316, 318 are also shown. The first client device 316 may be associated with a first user responsible for obfuscating images whereas the second client device 318 may be associated with a second user wishing to access and decrypt obfuscated images. In practice, it will be appreciated that multiple users or user groups may assume the first user and/or second user roles, and there may even be overlap between the two roles.

In general overview, the image portion identification module 302 provides a UI for a user, for example the first user associated with the first client device 315, to access and view one or more images from the images repository 310. The first user may select a first image and identify that they wish to create a so-called encryption channel for one or more image portions within the first image. An encryption channel may be considered use of a particular encryption algorithm and a key/secret used by the encryption algorithm . It may also comprise allocating permissions, e.g. to one or more second users. The one or more image portions may be those that represent sensitive information that they wish to obfuscate, at least for one or more second users. The first user may be presented with the first image and may define the one or more image portions using respective bounding boxes, or other shapes or polygons, e.g. using a click-and-drag input, using a pointwise or freehand -defined boundary, inputting co-ordinates and/or similar. Any suitable means of defining an image portion may be used, from which a string of the enclosed pixels may be received and processed as below, e.g., by swapping pairs of pixels. As also mentioned above, use of a machine-learned model may be used automatically to identify image portion(s).

Assuming at least a first image portion is identified, the image portion identification module 302 may create a key for the encryption channel. The key may be used by the modification module 304 to perform encryption of the identified at least first image portion. The key may be a seed or created based on a seed. For example, creating the key may involve prompting the first user to input or generate a seed which may be input to a pseudorandom number generator (PRNG) which generates the key.

Alternatively, the seed or key may be automatically generated. The key may be unique. A sidecar file may store metadata for the encryption channel, comprising an indication of the at least one image portion, e.g. respective bounding boxes, and the generated key or a link to the generated key. The key may be stored elsewhere and the sidecar file may provide a link to the generated key. Any suitable association of an identity of the one or more image portions, e.g. bounding boxes or co-ordinates, and the key used to encrypt them, may be referred to as an access profile.

In some example embodiments, multiple encryption channels may be created in respect of the first image. For example, a first encryption channel may be created in respect of a first image portion and a second encryption channel may be created in respect of a second image portion. In this way, different keys may be used to encrypt different portions which may mean that some users may access only one of the first and second image portions, or more generally, a subset of multiple image portions.

The modification module 304 may use the key for a given encryption channel to encrypt and therefore obfuscate pixels within the at least one image portion.

Encryption may be by means of any suitable transform operation. The key may map to a particular transform operation and/or parameters thereof. According to one or more example embodiments, the transform may be a reversible transform that retains all image information within the obfuscated image portion. In this way, there is no need to keep the original image which can be subsequently deleted, e.g. from the images repository 310. This results in security benefits and data storage efficiencies. All that is required for undoing or reversing the transform, i.e. decryption, is provided in the access profile of the encryption channel; namely the image portion or portions (specifically pixel positions or coordinates) and the key used to perform encryption. Example encryption transforms are described further below, including one or both of pixel swapping within a given image portion and color channel rotation.

The permissioning module 306 is configured to identify one or more users who may create encryption channels, for example the first user referred to above.

The permissioning module 306 may also be used to identify one or more users who may view the one or more image portions associated therewith, when viewing the updated image with one or more obfuscated portions.

The permissioning module may provide licenses for this purpose.

The permissioning module 306 may store a list of all users within an organization, in any suitable form, and may issue creation licenses that can be allocated to certain subset(s) of users; these users may access and encrypt all or a subset of images stored on the images repository 310.

The permissioning module 306 may also issue decryption licenses for a given encryption channel that can be allocated to certain subset(s) of users; these users may cause decryption of obfuscated image portions identified in the access profile. By "cause decryption" is meant that the users may access the key and directly decrypt the obfuscated image portions, or the decrypting module 308 may decrypt the obfuscated image portions on users' behalf, provided user permissions allow.

The permissioning module 306 may also issue more general decryption licenses for all encryption channels that can be allocated to certain users; these users may cause decryption of all obfuscated image portions.

Such access privileges may be assigned and allocated using any suitable scheme and with any level of granularity.

In this way, a user such as the second user mentioned above, when viewing a particular updated image, e.g. the first image with one or more obfuscated regions, may request to view an obfuscated image portion. This may involve hovering a mouse pointer or similar over the obfuscated image portion, and possibly selecting it by one or more mouse clicks. The permissioning module 306 may identify the second user in any suitable way, e.g. using their current login details and/or IP address, and determine if they have a license to view the obfuscated image portion. If so, this may be signaled to the decrypting module 308. If not, the obfuscated image portion remains obfuscated, and a denial message may be presented. In another embodiment, the second user may not need to make a specific request other than by viewing or requesting to view the particular updated image; that is, the second user may be identified as above and, depending on their permissions in the license, the image may be shown with all image portions (which they are permitted to see) already decrypted.

The decrypting module 308 may be configured, responsive to the abovementioned signal from the permissioning module 306, i.e. that a requesting user is permitted to view an obfuscated image portion, to access the key from the relevant access profile and perform a reverse transform based on said key. This enables the requesting user to see the updated image with the (unmodified) image portion, although other image portions may remain obfuscated. The requesting user may see the unmodified image portion temporarily, e.g. for only a predetermined amount of time and/or until the updated image is closed. In this case, the same requesting user may subsequently have to go through the same selection process described above in order to see the same unmodified image portion. Additionally, or alternatively, the requesting user may save the updated image with the unmodified image portion in local or cloud storage; the same user may thereafter open the saved updated image, which may show the unmodified image portion with other image portions still obfuscated.

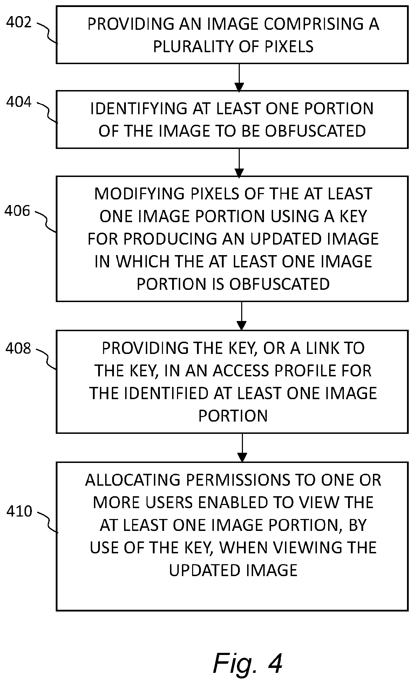

FIG. 4 is a flow diagram showing processing operations that may be performed in accordance with one or more example embodiments. The processing operations may be performed using hardware, software, firmware or a combination thereof.

A first operation 402 may comprise providing an image comprising a plurality of pixels.

A second operation 404 may comprise identifying at least one portion of the image to be obfuscated.

A third operation 406 may comprise modifying pixels of the at least one image portion using a key for producing an updated image in which the at least one image portion is obfuscated.

A fourth operation 408 may comprise providing the key, or a link to the key, in an access profile for the identified at least one image portion.

A fifth operation 410 may comprise allocating permissions to one or more users enabled to view the at least one image portion, by means of the key, when viewing the updated image.

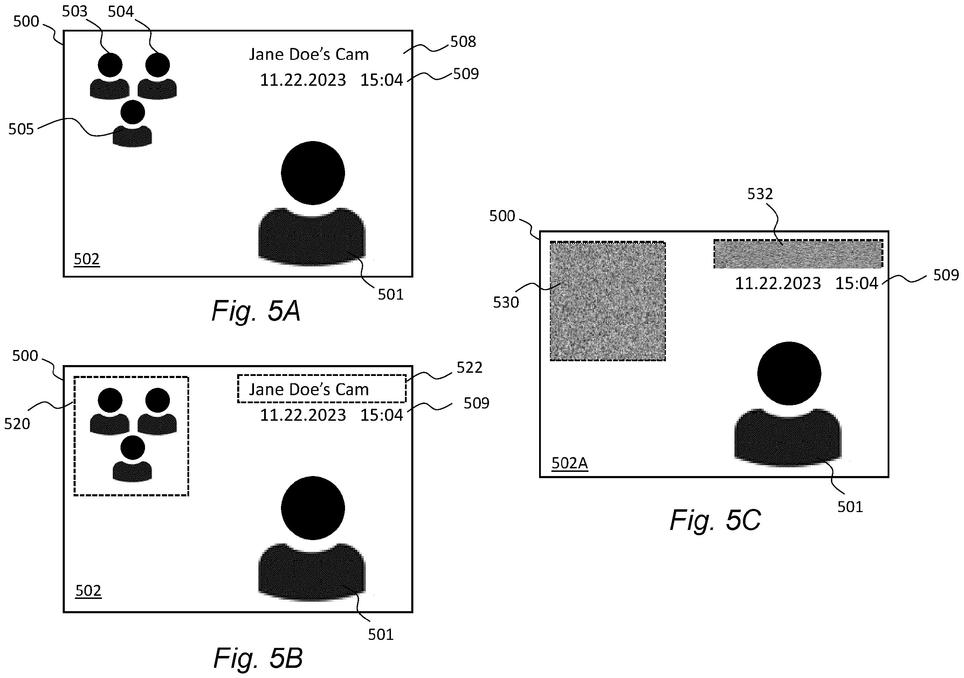

FIG. 5A is a view of part of a UI 500 associated with the image portion identification module 302 of the image obfuscation application 109. The UI 500 shows a first image 502 stored in the images repository 310 when opened by a first user, e.g. an administrative user with a license to create obfuscated versions of images. The first image 502 may depict, by its pixels, part of evidence for a police investigation in which a camera captures a photograph of a witness 501; in the background are a group of other individuals 503, 504, 505 who are passing by and are not relevant to the investigation. The first image 500 may also comprise first text 508 indicating the name of a police officer associated with the camera, and second text 509 indicating a capture date and time.

Referring to FIG. 5B, the first user or a ML model may determine that the group of individuals 503, 504, 505 are not relevant to the investigaton and, because their identities are unknown, consent cannot be obtained. This portion of the first image 502 may be considered sensitive. Similarly, the identity of the relevant police officer is revealed in the first text 508. This portion may also be considered sensitive. The first user may therefore create first and second encryption channels, one for each portion. For the first encryption channel, the first user may define a first image portion 520 using a bounding box and create or cause creation of a key for storing in a relevant access profile for this image portion. The modification module 304 may then use the key to modify, that is encrypt, pixels of the first image portion 520 in a reversible way such that pixel information is retained within the encrypted version. The permissioning module 306 may be used to allocate permissions for certain users or user groups to be able to decrypt an obfuscated version of the first image portion 520. The same process may be followed for the second encryption channel, including defining a second image portion 522 using another bounding box, creating or causing creation of another key for storing in a different access profile and allocating permissions. Access profiles may be stored in the access profile repository 314 (see FIG. 3).

Referring to FIG. 5C, an updated version 502A of the first image 502 is shown in the UI 500. Pixel information within the first and second image portions 520, 522 is encrypted and hence the content is obfuscated as shown by first and second regions 530, 532. The updated version 502A may be stored in the obfuscated images repository 312 (see FIG. 3) and, in some cases, the original version of the first image 502 may be deleted from the images repository 310. FIG. 5C represents what a requesting user, e.g. the second user, will subsequently see when requesting opening of the first image 502. One or more sidecar files for the first and second image portions 520, 522 may be stored in association with the updated version 502A of the first image 502 stored in the obfuscated images repository 312. The sidecar files may include metadata indicative of the relevant pixel positions / bounding boxes for the relevant image portion 520, 522, with either the key or a link to the key used for encryption of the relevant image portion.

It will be seen from FIG. 5C that non-sensitive image content is still visible, namely the witness 501 and the second text 509 indicating capture date and time.

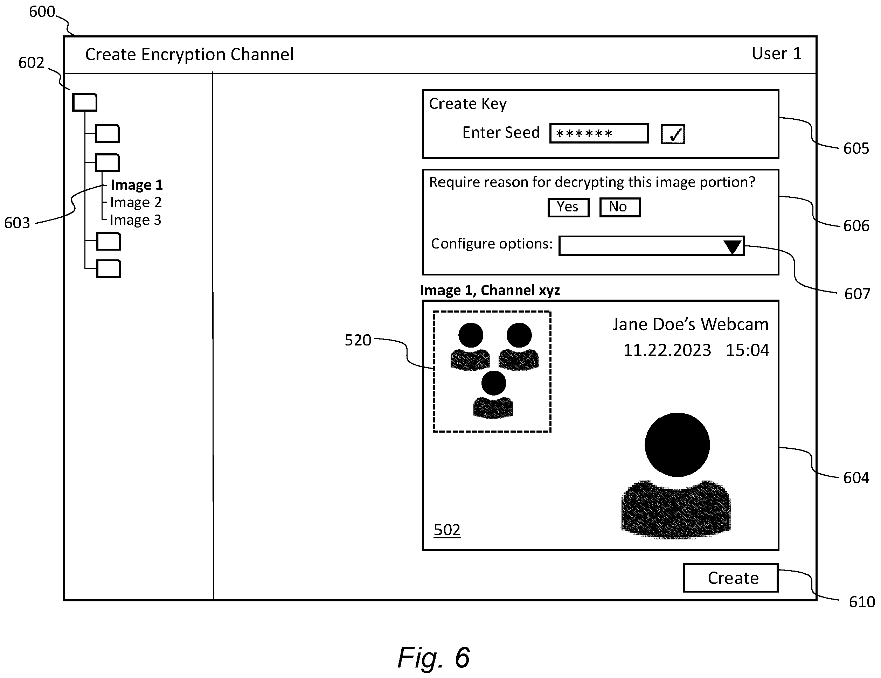

FIG. 6 is a view of another UI 600 associated with the image portion identification module 302 of the image obfuscation application 109. This UI 600 may be relevant for creating an encryption channel. The UI 600 may be a multi-portion UI in which a first portion 602 includes an indication of a file system hierarchy associated with the images repository 310. The first user may select an image, in this case "image 1", from a relevant folder; this may be the first image 502 referred to above which may then be opened in a dedicated image viewing window 604. The first user may then identify one or more image portions, in this case the first image portion 520, using click-and-drag inputs to provide a bounding box as per FIG. 5B.

When all required image portions have been identified for the encryption channel, a "create key" window 605 may be used. The first user may enter a seed or request an auto-generated seed that is input to a text entry field within the window 605. Upon clicking a confirm button, the key for the encryption channel is generated and stored for the encryption channel. A further "reasons" window 606 may also provided as an option; the first user may, for auditing purposes, wish to understand why a requesting user wishes to view an obfuscated image portion within this encryption channel. A pull-down menu may allow selection of a plurality of possible reasons that requesting users may give when attempting to access the first image 502.

Upon selection of a "create" button 610, the first image portion 520 is encrypted by the modification module 304 using the generated key for the encryption channel.

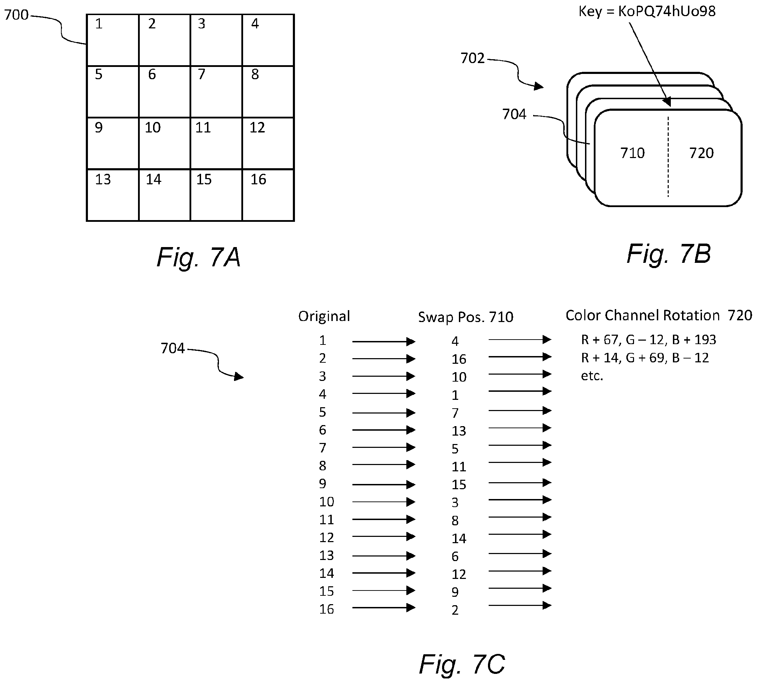

FIGs. 7A - 7C are useful for understanding one reversible transform method that may be used to encrypt one or more image portions according to example embodiments. FIG. 7A shows, by way of a simple example, a small rectangular image portion 700 comprising sixteen pixel positions arranged in a 4×4 grid. We may assume that the first user mentioned above has identified this image portion 700 because it shows sensitive information. Upon creation of an encryption channel, a key is generated as above. We may assume has the example value KoPQ₇₄hUo98.

FIG. 7B shows how encryption may be performed based on this key. At a first level, the key may be used to swap pixel information (i.e. pixel values) between pairs of pixels within the image portion. A plurality of unique swap lists 702 may be provided for use by a reversible transform (encryption algorithm) and the key may point to one of them, in this case a selected swap list 704. The swap lists 702 may be pre-provided or may be generated on the fly using the seed - in effect the seed transforms via a transform algorithm to a key which can be considered the unique swap list. A first part 710 of the swap list comprises different pairwise combinations of pixel positions within the at least one image portion for which respective pixel information will be swapped by the transform; the length of the pixel list will depend on the resolution and format of the image. The seed or key may for example be used to generate the swap positions. Here, a length sixteen swap list is used, but in some embodiments, the length of the swap list need not be the same as the number of pixels. For example, the swap list may comprise a greater number of pairwise positions to swap than the number of pixels, e.g. whereby a first pixel is swapped from position "1" to position "4" and then swapped again from position "4" to position "12 ". The swap list length may for example be proportional to the pixel number, such as length of the image portion multiplied by width multiplied by an integer such as ten. The rationale here is that more swaps mean a more scrambled image. As mentioned, the process is reversible so long as the swap list can be identified. A second, optional, part 720 may modify color channel information for each pixel using respective change amounts for the different color channels, e.g. R, G, B. Again, the seed or key may be used to generate the different change amounts.

FIG. 7C shows an example format for the selected swap list 704. Original pixel positions shown in FIG. 7A are indicated in the first column. Respective swap positions (from the first part 710 of the swap list 704) are indicated in the second column. Hence, pixel information for the first pixel position will swap places with pixel information for the fourth pixel position, and so on. If provided, the second part 720 of the swap list indicates change amounts of the different color channels, R, G, B, from their current values. So, after swapping position, the red channel of the first pixel position may have its value increased by 67, the green channel may have its value reduced by 12 and the blue channel may have its value increased by 193. All other pixel positions, and particularly adjacent pixel positions may have different change values as partly indicated in FIG. 7C. This reduces the likelihood of a reconstruction attack based on adjacent pixels in the original image portion having the same or similar colors.

The image is then saved in the obfuscated images repository 312 with the obfuscated image portion (and others, if identified) along with metadata in a sidecar file indicating the bounding box for said image portion and the seed/key or pointer to the key. One or more permissions/licenses may be issued to one or more users for enabling decryption of the obfuscated image portion.

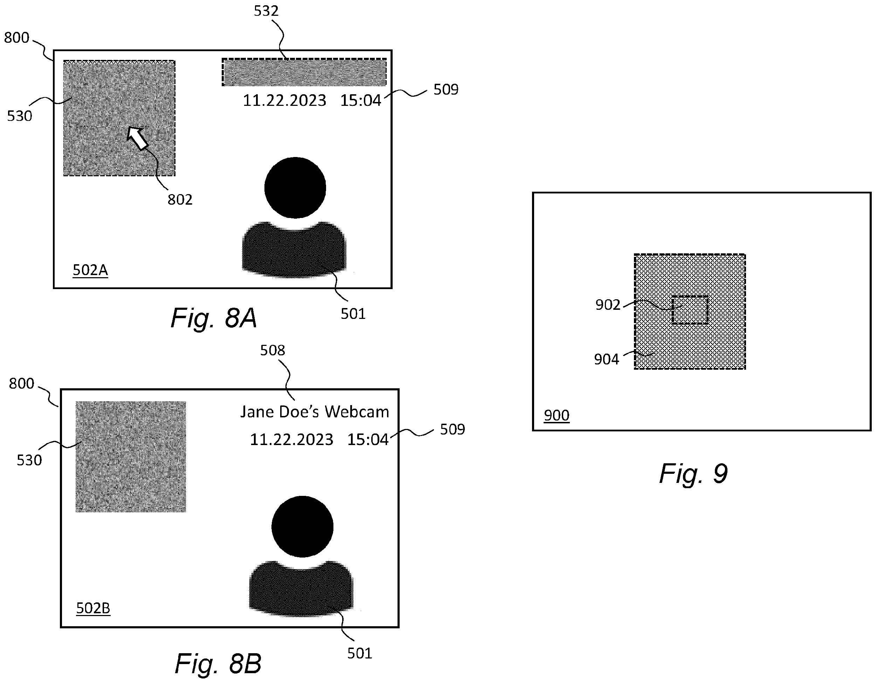

Referring to FIG. 8A, when a user, e.g. the second user mentioned above, wishes to view an image, e.g. the first image 502 shown in FIG. 5A, they may be presented instead with the updated version 502A from the obfuscated images repository 312. Opening the image may require a special UI 800 associated with the decrypting module 308 for processing user inputs associated with such updated images. In this case, the second user sees the non-sensitive parts (the witness 501 and capture date and time 509) and the obfuscated first and second regions 530, 532. The second user may wish to decrypt the obfuscated second region 532 as part of their workflow. They may signal this to the system by means of hovering a mouse pointer or cursor 802 over the obfuscated second region 532. In some cases, this hovering may be sufficient to trigger decryption; in other cases, a positive mouse click or similar may additionally be required. If the second user has a license to access the first region 532, as determined via use of the permissioning module 306 and/or access profiles 314, the key is accessed by the decrypting module 308 which then performs the reverse transform. In some cases, a reason for requesting decryption may be requested, which is for auditing purposes. As shown in FIG. 8B, the second user then sees a further updated version 502B with the decrypted second region 532 which comprises the police officer's name 508. The second user may perform their analysis. In this case, the obfuscated first region 530 remains obfuscated to the second user. In some cases, if the second user also has a license to access the obfuscated first region 530, this may also be decrypted without the need for a further mouse operation. In other cases, a further hover and click operation may be required in respect of the obfuscated first region 530. If the second user does not have a license to access the obfuscated first region 530, it remains obfuscated.

The second user may save the further updated version 502B and, upon re-opening, it will remain the same provided it is initiated by the second user.

FIG. 9 illustrates a possible situation in which, for a provided image 900, first and second image regions 902, 904 may be identified and obfuscated with different keys. The first image region 902 is wholly within the second image region 904. In this situation, different rules may apply. For example, a user with a license to decrypt the first image region 902 may be prevented from doing so if they do not have a license to decrypt the second image region 904; alternatively, they may only decrypt the first image region leaving the surrounding area obfuscated. For example, a user with a license to decrypt the second image region 904 may be prevented from doing so if they do not have a license to decrypt the first image region 902; alternatively, they may be permitted to decrypt both the first and second image regions notwithstanding that they do not have permission to decrypt the first image region. Alternatively still, the user may only decrypt the second image region 904 other than pixels within the first image region 902. Similar rules may be applied to partial overlaps.

Example embodiments describe a more flexible and storage efficient way for protecting sensitive information and certain users from potentially adverse effects of seeing sensitive information. An example application includes obfuscating disturbing portions of video footage where the non-disturbing background is still useful for investigative purposes; access to the disturbing portions may be limited to only senior or specially-trained investigators. Other example applications include obfuscating specific geolocations, landmarks, social security codes, vehicle license details, patient information shown on medical images, e.g. X-rays, and so on.

The various features and processes described above may be used independently of one another, or may be combined in various ways. All possible combinations and sub combinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

## Claims

1. A computer-implemented method, wherein the method is performed using one or more processors, the method comprising:
providing an image comprising a plurality of pixels;
identifying at least one portion of the image to be obfuscated;
modifying pixels of the at least one image portion using a key for producing an updated image in which the at least one image portion is obfuscated;
providing the key, or a link to the key, in an access profile for the identified at least one image portion;
allocating permissions to one or more users for enabling them to view the at least one image portion, by use of the key, when viewing the updated image.

2. The computer-implemented method of claim 1, wherein the at least one image portion is a sub-portion of the image.

3. The computer-implemented method of claim 2, comprising:
identifying a plurality of sub-portions of the image to be modified; and
for each image portion:
modifying pixels of the image portion using a respective key; and
storing the key in a respective access profile.

4. The computer-implemented method of any preceding claim, wherein modifying the pixels of the at least one image portion comprises using the key to implement a reversible transform such that pixel information of the at least one image portion is retained within the updated image.

5. The computer-implemented method of claim 4, wherein the reversible transform modifies the pixels of the at least one image portion by swapping pixel information between pairs of pixels within the image portion.

6. The computer-implemented method of claim 5, wherein the key maps to a swap list for use by the reversible transform, the swap list comprising pairwise combinations of pixel positions within the at least one image portion for which respective pixel information will be swapped by the modification.

7. The computer-implemented method of claim 6, wherein the reversible transform further modifies the pixels of the at least one image portion by changing color channel information, wherein the key maps to change amounts of color channel information to apply for each pixel position and optionally wherein the key maps to a swap list comprising (i) a unique pairwise combination of pixel positions and (ii) a unique set of change color change amounts to apply for each pixel position.

8. The computer-implemented method of any preceding claim, further comprising receiving input defining at least one bounding box or polygon on the provided image, the identified at least one image portion comprising pixels within the bounding box.

9. The computer-implemented method of any of claims 1 to 8, further comprising inputting the provided image to a machine-learned model trained to identify portions of images representing sensitive information, wherein the identified at least one image portion is identified by the machine-learned model.

10. The computer-implemented method of any preceding claim, wherein the access profile is stored as metadata associated with the provided image and optionally wherein the metadata comprises an indication of the key, or a link to the key, and location information for the at least one image portion modified by the key.

11. The computer-implemented method of any preceding claim, performed by a computer system comprising the one or more processors, the method further comprising storing the provided image on one or more memories of the computer system and deleting the provided image after producing the updated image.

12. The computer-implemented method of any preceding claim, further comprising:
providing the updated image for display to a requesting user;
receiving selection of the at least one image portion by the requesting user;
determining, based on the allocated permissions, that the requesting user is permitted to access the key for the selected at least one image portion;
accessing the key in the access profile for the selected at least one image portion; and
reversing the modification of pixels of the selected at least one image portion using the accessed key.

13. The computer-implemented method of claim 12, wherein selection of the at least one image portion is received at least by means of hovering a movable pointer over the at least one image portion.

14. The computer-implemented method of claim 12 or claim 13, when dependent on claim 6, further comprising using the key to access the swap list used for transforming the selected at least one image portion, and using the swap list to at least reverse the positions of pixels of the selected at least one image portion and optionally, when dependent on claim 7, further comprising using the key to determine change amounts of color information used for transforming the selected at least one image portion, and reversing the changes of color information of the selected at least one image portion.

15. An apparatus comprising:
one or more processors; and
a memory storing instructions that, when executed by the one or more processors, cause the system to perform the method of any preceding claim.
